# EUROPÄISCHE PATENTANMELDUNG

(11) **EP 3 279 759 A1**
(43) Veröffentlichungstag der Anmeldung: **07.02.2018**
(21) Anmeldenummer: 16001750.5
(22) Anmeldetag: 06.08.2016
(51) Int. Cl.: G05D 1/02

(54) **METHODE ZUR TEMPORÄREN MÄHBEREICHSVERÄNDERUNG MITTELS "BEGRENZUNGSKABELWEICHE FÜR MÄHROBOTERSYSTEME**

(71) Anmelder: Atzlinger, Hermann, 5310 St. Lorenz/Mondsee (AT)
(72) Erfinder: Atzlinger, Hermann, 5310 St. Lorenz/Mondsee (AT)

(57) **Zusammenfassung**

Eine einfache Methode zur dynamischen Festlegung des Mähbereiches für Mährobotersystem. Mit Hilfe einer "Begrenzungskabelweiche" wird der gesamte Mähbereich um definierte Teilflächen temporär eingeschränkt und / oder erweitert. Die Anzahl der zu- und abschaltbaren Teilflächen ist theoretisch unbegrenzt.

## Beschreibung

Die Erfindung bezieht sich auf das Gebiet der Mährobotersysteme

### Stand der Technik und Hintergrund:

Die meisten Mährobotersysteme verwenden ein Begrenzungskabel in dem elektrische Impulssignale geführt werden um den Mähbereich für den Roboter zu markieren. Das Begrenzungskabel wird entweder am Erdboden oder knapp unter der Erde verlegt und legt den gesamten Bereich fest der in einem Arbeitsgang vom Roboter bearbeitet wird.

Dieser Bereich ist statisch durch die Lage des Kabels im Erdboden festgelegt und kann bisher nur durch Neuverlegen des Begrenzungskabels verändert werden.

Im praktischen Einsatz von Mährobotersystemen gibt es jedoch Situationen in denen die temporäre Abschaltung und / oder Zuschaltung von Teilbereichen "Zonen" notwendig oder zumindest wünschenswert ist. Stellvertretend hierzu sind die folgenden drei Beispiele angeführt:
1. Ein Teil (Zone) des gesamten Mähbereiches wird als Aufenthaltsbereich / Liegewiese / Spielbereich für Kinder genutzt. Während dieser Nutzung sollte der Mähroboter diese Zone nicht bearbeiten und sich auf den restlichen Mähbereich beschränken. Vor und nach der Nutzung sollte er auch diese Zone mähen.
2. Im Mähbereich befindet sich eine tiefer gelegene Zone die bei Regen sehr nass oder sogar leicht unter Wasser steht. Der höher gelegene Teil kann immer gemäht werden, während der tiefer gelegene Teil nur bei entsprechender Trockenheit bearbeitet werden soll.
3. In manchen Rasenflächen wachsen zu bestimmten Jahreszeiten Blumen (beispielsweise im Frühjahr Narzissen, Tulpen) die während der Zeit des Wachsens und der Blüte nicht vom Mähroboter überfahren werden sollten. Nach der Blüte sollen diese Stellen jedoch ganz normal gemäht werden.

Diese Beispiele zeigen, dass es durchaus einen praktischen Bedarf für das temporäre Ab- und Zuschalten von Teilbereichen(Zonen) gibt, wobei aber der Mähbetrieb für den restlichen Bereich nicht unterbrochen werden soll. Dies kann mit den bestehenden Systemen nicht erreicht werden.

Mit Hilfe der Erfindung "Begrenzungskabelweiche" wird eine einfache Lösung für die oben genannten Beispiele realisiert:
Jene Zonen, die temporär ab- und/oder zugeschaltet werden sollen, werden ebenfalls mit dem gleichen Begrenzungskabel markiert und über die Begrenzungskabelweiche mit dem Begrenzungskabel des Gesamtbereiches verbunden. Die Weiche aktiviert / deaktiviert jenen Abschnitt des Begrenzungskabel der mit ihr verbunden ist und verändert damit unmittelbar den zu bearbeitenden Mähbereich des Roboters durch Umlenken der elektrischen Impulssignale von der Ladestation oder Signaleinrichtung.

Weiters kann die Begrenzungskabelweiche als temporäre virtuelle Sperre für Randzonen eingesetzt werden. Hier braucht die abzusperrende Zone nicht gänzlich mit dem Begrenzungskabel eingefasst werden, es genügt in diesem Fall eine Schleife mit paralleler Kabelführung mit ausreichendem Abstand. Die Begrenzungskabelweiche kann entweder manuell oder per Fernbedienung betätigt werden.

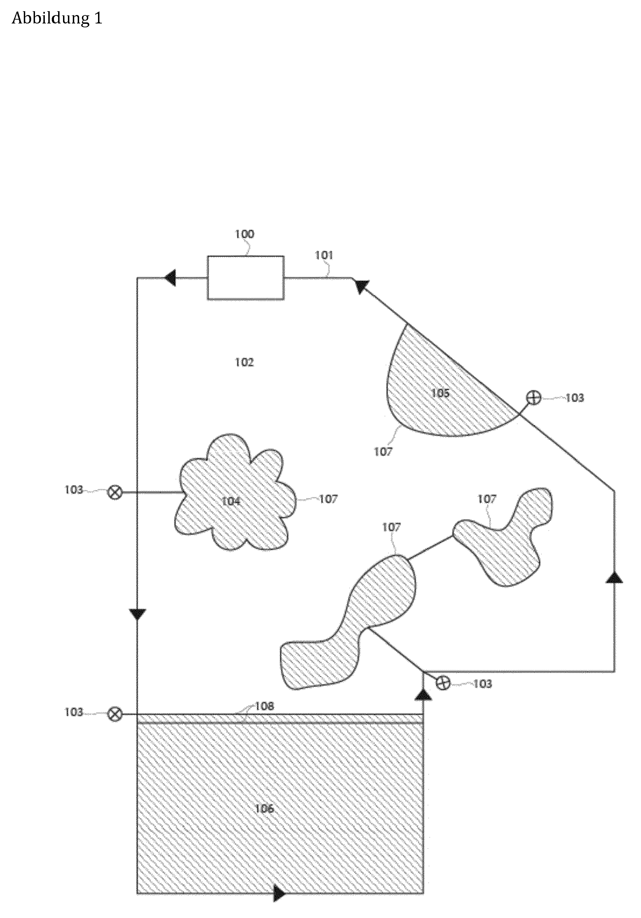

Abbildung 1 zeigt einige Möglichkeiten des Einsatzes der Begrenzungskabelweiche auf: Eine Ladestation oder Signaleinrichtung (100) für das Begrenzungskabel (101) legt den Mähbereich fest. Der gesamte Mähbereich wird vom äußeren Rand des Begrenzungskabels (101) umschlossen. Die Teilbereiche (104) und Randbereiche (105) und (106) sind mittels Begrenzungskabelweichen (103) mit dem äußeren Begrenzungskabel (101) verbunden und selbst mit einem zusätzlichen Begrenzungskabel (107) markiert. Die Randzone (106) wird durch eine virtuelle Sperre (108) bestehend aus zwei parallel verlaufenden Begrenzungskabeln fallweise blockiert.

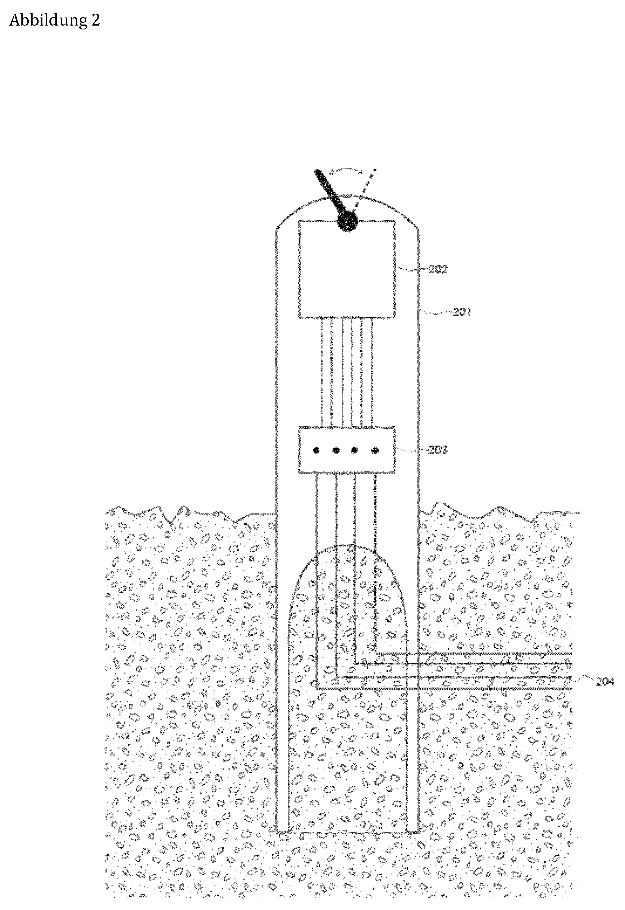

Die Begrenzungskabelweiche besteht im Wesentlichen aus folgenden Teilen wie in Abbildung 2 dargestellt ist:
- Schutzhülle mit Bodenverankerungsvorrichtung (201)
- Verbindungselement (203) zu Begrenzungskabeln und ggf. Suchkabeln (204)
- Schaltelement (202)
Als Schaltelement wird ein 2-fach Wechselkontaktschalter (Handbedienung) oder ein 2-fach Wechselkontaktrelais (Fernbedienung) eingesetzt. Sofern das Mährobotersystem ein Suchkabel verwendet, kann für weit entfernte Randzonen, die im Bereich des Suchkabels liegen, das Suchkabel optional mitgeschaltet werden. In diesem Fall besteht das Schaltelement aus einem 3-fach Wechselkontaktschalter (Handbedienung) oder 3-fach Wechselkontaktrelais (Fernbedienung).

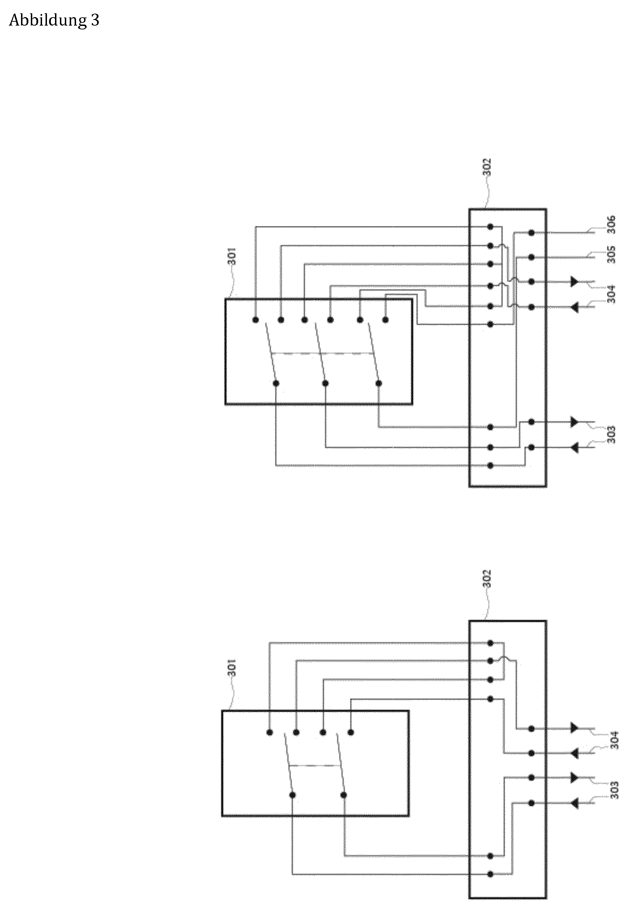

In Abbildung 3 wird das Schaltschema der Begrenzungskabelweiche ohne und mit Einbeziehung eines Suchkabels dargestellt:
Schaltelemente (301) und Verbindungselemente (302), Begrenzungskabel mit Verbindung zur Lade -/ Signalstation (303), Begrenzungskabel für ab- und zuschaltbare Zone (304), Suchkabel mit direktem Anschluss an Signalstation (305), Suchkabel mit Verbindung zum äußeren Begrenzungskabel(306)

### Einsatzgebiet und Möglichkeiten:

Die Begrenzungskabelweiche kann als Ergänzung / Erweiterung für Mährobotersysteme der meisten Hersteller zum Einsatz gebracht werden. Die Anzahl der temporär zu-/ abschaltbaren Zonen, die pro System eingerichtet werden kann ist theoretisch nicht begrenzt. Bereits vorhandene Installationen von Mährobotersystemen können nachträglich nachgerüstet werden.

## Patentansprüche

1. Methode einer dynamischen / temporären Mähbereichsschaltung mittels "Begrenzungskabelweiche für Mährobotersysteme"

2. "Begrenzungskabelweiche für Mährobotersysteme" in verschiedenen Ausführungen
